# EUROPÄISCHE PATENTANMELDUNG

(11) **EP 4 757 142 A1**
(43) Veröffentlichungstag der Anmeldung: **10.06.2026**
(21) Anmeldenummer: 24217153.6
(22) Anmeldetag: 03.12.2024
(51) Int. Cl.: H02K 11/33, H02K 3/50, H02K 3/38, H02K 5/16, H02K 5/22

(54) **KONTAKTIERRING ZUR KONTAKTIERUNG EINER GEHÄUSEINTEGRIERTEN UMRICHTEREINHEIT**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner mbB

(57) **Zusammenfassung**

Vorgeschlagen wird eine elektrische Maschine, insbesondere eine Drehstromasynchron- oder Drehstromsynchronmaschine, in einem Gehäuse, umfassend eine gehäuseintegrierte Umrichtereinheit (3), die insbesondere in das Lagerschild integriert ist. Außerdem beinhaltet sie einen Stator mit einem Kontaktierring (1). Die Leitungsenden der Statorwicklung sind mit Steckkontaktiereinheiten (12) versehen, die mithilfe erster Fixierungsgeometrien (11) an definierten Positionen auf dem Kontaktierring (1) befestigt sind. Sowohl Kontaktierring (1) als auch der Stator weisen zweite Fixierungsgeometrien (14) auf, durch die der Kontaktierring (1) mit dem Stator verbunden ist. Das Herstellungsverfahren für eine solche elektrische Maschine umfasst mehrere Montageschritte. Zunächst werden Steckkontaktiereinheiten (12) an den Leitungsenden der Wicklungsleitungen eines Stators angebracht. Anschließend die Steckkontaktiereinheiten (12) in die ersten Fixierungsgeometrien (11) eines Kontaktierrings (1) eingesetzt und der Kontaktierring (1) mittels der zweiten Fixierungsgeometrien (14) am Stator befestigt. Danach wird die Statoreinheit axial in das Gehäuse eingefügt oder eingepresst. Schließlich wird eine Umrichtereinheit (3), die mit Steckkontaktiergegenstücken (13) ausgestattet ist, axial in das Gehäuse eingeschoben, bis sie ihre Endposition erreicht, in der die Steckkontaktiereinheiten (12) und die Steckkontaktiergegenstücke (13) so zusammengefügt sind, dass der Stator und die Umrichtereinheit (3) kontaktiert sind.

## Beschreibung

Die vorliegende Erfindung betrifft eine elektrische Maschine, insbesondere eine Drehstromasynchron- oder eine Drehstromsynchronmaschine, und ein Verfahren zur Montage einer elektrischen Maschine.

### Stand der Technik

Bisher wird die Statorwicklung einer elektrischen Maschine, wie Drehstromasynchron- und Drehstromsynchronmotoren, durch verschiedene Kontaktierungsmethoden wie Crimpen, Löten oder Schweißen mit Anschlussleitungen verbunden, die typischerweise Kabelschuhe an den Enden haben. Diese Anschlussleitungen werden zur Kontaktierung mit der notwendigen Spannungsversorgung manuell durch eine Gehäuseöffnung zu einem Klemmenbrett im Anschlusskasten geführt.

Für drehzahlveränderbare dynamoelektrische Maschinen, wie Elektromotoren, vor allem Synchron-, Asynchron-, und Reluktanzmotoren werden Frequenzumrichter zum Einstellen der gewünschten Drehzahl benötigt.

Bei dezentralen, insbesondere wandmontierten Umrichter-Ausführungen in Schaltschränken, erfolgt die Verbindung zwischen Umrichter und Motor über eine separate Zuleitung zum Klemmenbrett, während bei sogenannten integrierten Umrichter-Ausführungen die Anschlussleitungen direkt durch die Gehäuseöffnung zum Umrichter geführt werden. Bei diesen bisher im Stand der Technik als integrierte Umrichter bezeichneten Lösungen sind die Umrichtereinheiten auf eine Gehäuseöffnung der elektrischen Maschine aufgesetzt. Alternativ wird von motormontierten Umrichtern gesprochen. Auch hier werden die Anschlussleitungen zumeist manuell herausgeführt. Diese Vorgehensweise führt zu hohen Montagekosten, insbesondere bei kleineren Baugrößen, und beeinträchtigt die Kompaktheit des Antriebssystems.

Zusätzliche Leitungen für thermische Überwachung oder andere Einbauteile werden ebenso manuell durch die Gehäuseöffnung geführt, was den manuellen Aufwand noch weiter erhöht. Diese Methoden erfordern die Verwendung von Aderendhülsen und die Kontaktierung mittels Lüsterklemmen oder Cage-Clamp-Kontakten, was ebenfalls die Komplexität und die Kosten erhöht.

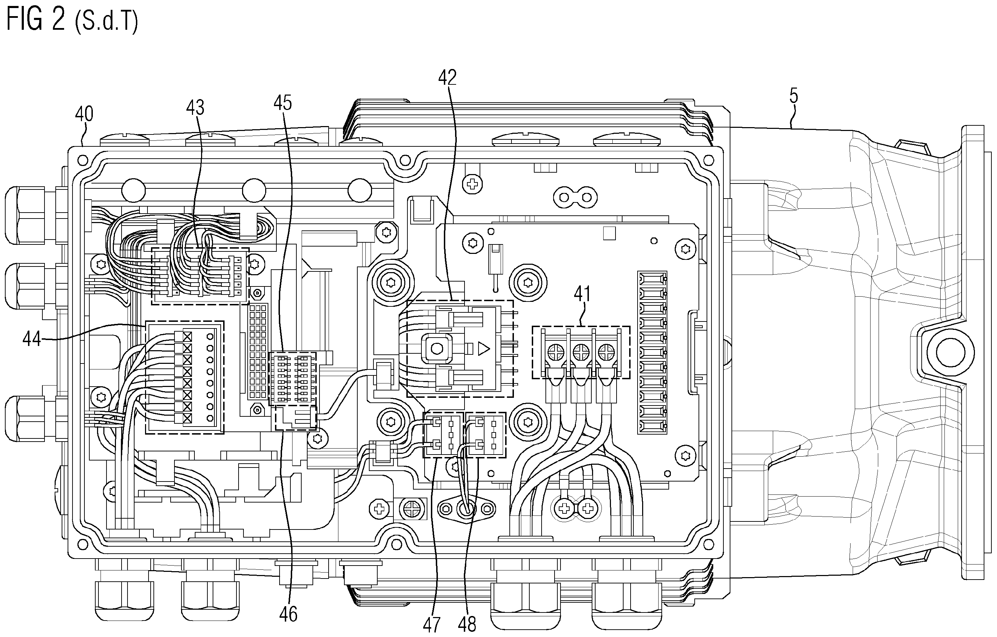

Bisher, wie beispielsweise in Figur 2 illustriert, erfolgt also die Kontaktierung der Energieleitung, der Signalleitungen und der Umrichteranschlüsse auf einem Klemmbrett im Klemmenkasten am Motorgehäuse. Diese Ausführung der Montage direkt am Gehäuse benötigt viel Bauraum und macht den Antrieb vergleichsweise groß und schwer.

Die bestehenden Lösungen schränken des Weiteren die Modularität und Austauschbarkeit der Antriebssysteme ein und führen zu einem erhöhten Platzbedarf und manuellen Arbeitsaufwand beim Anschluss der Komponenten. Ein weiterer Nachteil der bestehenden Methoden ist die Notwendigkeit, jede Komponente einzeln zu verbinden, was sowohl zeitaufwendig als auch anfällig für Fehler ist. Alternativmaterialien oder alternative Designs für die Kontaktierung wurden bislang kaum genutzt, da die bestehenden Methoden auf Industriestandards und etablierten Praktiken basieren.

Ansätze, bei denen Motor und Umrichter axial hintereinander angeordnet werden, sind beispielsweise aus der EP 0 854 560 A1 bekannt. Bisher jedoch benötigen Ausführungen von Umrichtern direkt am Motor viel Bauraum, da das Lager zwischen Motor und Umrichter ist. Dies macht den Antrieb vergleichsweise groß und schwer.

Aus der DE 10 2004 031 399 A1 beispielsweise ist ein Umrichtermotor mit einem eigenbelüfteten Elektromotor und einem Frequenzumrichter bekannt, wobei in einem topfförmigen Lagerschild Bauteile des Frequenzumrichters am Boden des topfförmigen Lagerschildes angeordnet sind.

Auch dieser Antrieb benötigt vergleichsweise viel Bauraum.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung eine erhöhte Kompaktheit bei gleichzeitig vereinfachter Montage ermöglichen.

Diese der vorliegenden Erfindung zugrunde liegenden Aufgaben werden durch eine elektrische Maschine gemäß dem Patentanspruch 1 gelöst. Die auf die Montage bezogene Aufgabe wird gelöst durch ein Herstellungsverfahren gemäß Patentanspruch 10. Vorteile und Ausgestaltungen der Erfindung, die einzeln oder in Kombination miteinander einsetzbar sind, sind Gegenstand der Unteransprüche.

### Beschreibung der Erfindung

Die erfindungsgemäße elektrische, insbesondere eine Drehstromasynchron- oder Drehstromsynchronmaschine, umfasst eine gehäuseintegrierte Umrichtereinheit, insbesondere eine lagerschildintegrierte Umrichtereinheit und einen Stator mit einem Kontaktierring. Die Wicklungsleitungen des Stators haben Leitungsenden, die Steckkontaktiereinheiten aufweisen, welche mittels erster Fixierungsgeometrien auf definierten Positionen auf dem Kontaktierring befestigt sind. Sowohl der Kontaktierring als auch der Stator verfügen über zweite Fixierungsgeometrien, mittels welcher der Kontaktierring mit dem Stator verbunden ist.

Stator und Kontaktierring bilden dazu bevorzugt eine bauliche Einheit. Zweckdienlicherweise sind dabei Statoreinheit und Umrichtereinheit so im Gehäuse angeordnet, dass der Kontaktierring sich in axialer Richtung zwischen dem Stator und der gehäuseintegrierten Umrichtereinheit befindet.

Bevorzugt werden in der erfindungsgemäßen elektrischen Maschine Steckkontakte anstelle von Klemmen verwendet. Von besonderem Vorteil ist der Einsatz des Kontaktierrings, der zur Fixierung der Steckkontakte am Stator dient. Die Maschine umfasst eine integrierte Umrichterlösung, welche zusammen mit dem Kontaktierring für hohe Kompaktheit sorgt. Ein Teil der vorgeschlagenen Lösung besteht darin, die Leistungselektronik in das Gehäuse, insbesondere in das Lagerschild zu integrieren. Eine besondere Herausforderung stellt dabei der begrenzte Bauraum und die runde Ausführung der Umrichterlösung dar.

Die Vorteile liegen also zum einen in der baulichen Flexibilität. Durch die Verwendung von Steckkontakten anstelle von Klemmen ist ein sehr einfaches Zusammenfügen des Stators und des Umrichters im Gehäuseraum möglich. Zudem liegt ein Vorteil in der Stabilität. Die Fügeeigenschaften der Stator- sowie der Umrichtereinheit können optimiert werden. Der Kontaktierring ist ein mechanischer Anbau zur örtlichen Fixierung der Leitungsenden und bereitstellen von Steckkontaktiereinheiten an vorgebbaren Positionen, passend zu den Positionen von Steckkontaktiergegenstücken an der Umrichtereinheit. Kontaktierring und Stator sind bevorzugt mechanisch und kraftschlüssig miteinander verbunden, das heißt der Kontaktierring ist am Stator fixiert. Der Kontaktierring ermöglicht eine Reduzierung auf im Wesentlichen zwei bauliche Komponenten innerhalb des Gehäuses.

Unter Steckkontaktiereinheit und Steckkontaktiergegenstück werden insbesondere Stecker und Buchsen verstanden, wobei Stecker und Buchse auch vertauscht sein können. Stator-Leitungsenden können in Stecker münden und die Buchsen können in der Umrichtereinheit integriert sein oder umgekehrt.

Unter einer gehäuseintegrierten Umrichtereinheit ist zu verstehen, dass der Umrichter oder einzelne Komponenten des Umrichters innerhalb des Gehäuses angeordnet ist. Dies bewirkt, dass die elektrische Anbindung auch innerhalb des Gehäuses erfolgt und nicht aus dem Gehäuse herausgeführt wird. Es könnte auch von (Motor)innenraum-positionierter Umrichtereinheit gesprochen werden. Um eine Umrichtereinheit im Gehäuse zu integrieren, kann diese insbesondere an der Gehäuserauminnenwand befestigt sein. Besonders vorteilhaft ist eine lagerschildintegrierte Umrichtereinheit, wie sie beispielsweise in der EP 24199792.3 oder in der EP 24200040.4 vorgeschlagen werden. Auch eine kombinierte Lösung, bei der die Umrichtereinheit teilweise im Gehäuse und teilweise im Lagerschild integriert ist, ist denkbar. Derartige Ausführungsformen einer gehäuseintegrierten Umrichtereinheit können als Ausgangsbasis für die hier vorgeschlagene Anschlussring-Lösung herangezogen werden.

Unter einem Gehäuse ist die Umbauung der elektrischen Maschine zu verstehen, welche insbesondere Kühlelemente, Befestigungselemente und die Herausführung der Energieleitungen bereitstellt. Kühlelemente sind typischerweise Kühlrippen.

Ein weiterer Vorteil ist eine Lösung für die Herausforderung der Bauraumnutzung anzugeben. Besonders bevorzugt sind runde Umrichterausführungen. Bevorzugte Durchmesser richten sich nach dem Statordurchmesser. Dieser kann insbesondere bei circa 10 cm bis 15 cm liegen. Die vorgeschlagene Lösung kann auch für andere Leistungsklassen interessant sein. Insbesondere wird die vorgeschlagene Lösung in Drehstromasynchron- oder Drehstromsynchronmaschinen mit 1 kW bis 15 kW Leistung und Achshöhen von 80 mm bis 160 mm eingesetzt. Auch in Motoren mit bis zu 90 kW Leistung und Achshöhen bis zu 280 mm, kann die Lösung Anwendung finden.

Vorteilhafte Anwendung der Erfindung ist beispielsweise möglich in einem Antrieb, mit mindestens einer dynamoelektrischen rotatorischen Maschine, die in einem Gehäuse angeordnet ist, mit einem in einem Stator angeordneten Wicklungssystem und einem durch einen Luftspalt davon getrennten Rotor, der über mindestens ein Lager eines topfähnlichen Lagerschilds um eine Achse drehbar gelagert ist. Stator und Rotor befinden sich in einem Motorinnenraum. Dazu umfasst ist bevorzugt ein Umrichter, der mindestens einige der folgenden Bauelemente wie Leistungshalbleiter, Drosseln, Kondensatoren, Steuer- und Regeleinheiten sowie Kommunikationseinheiten aufweist und sich in einem Umrichterbauraum befindet, der zumindest abschnittsweise von dem Lagerschild radial umgeben ist. Einige Bauelemente des Umrichters sind mit dem Lagerschild thermisch leitend verbunden, indem insbesondere wärmeintensive Bauelemente des Umrichters an einer inneren Seitenwand des topfähnlichen Lagerschilds angeordnet sind. Bevorzugt ist der Umrichter axial betrachtet zwischen der dynamoelektrischen rotatorischen Maschine und dem Lager des topfähnlichen Lagerschilds angeordnet. Motorinnenraum und Umrichterbauraum sind insbesondere durch ein Abschirmelement getrennt.

In einer vorteilhaften Ausführungsform der erfindungsgemäßen elektrischen Maschine weist die gehäuseintegrierte Umrichtereinheit elektrische Anschlüsse auf, welche als Steckkontaktiergegenstücke zu den Steckkontaktiereinheiten ausgestaltet sind.

Zweckdienlicherweise sind Steckkontaktiereinheiten und Steckkontaktiergegenstücke passend zueinander angeordnet, d.h. es sind also Steckkontaktiereinheiten, Steckkontaktiergegenstücke und erste Fixierungsgeometrien in Position (und Anzahl) identisch, insbesondere in ihrer Position bezüglich radialer Entfernung von der Rotationsachse sowie in ihrer konzentrischen Anordnung. Hat der Umrichter seine Endposition im Gehäuse erreicht, stecken alle Buchsen und Stecker von Stator und Umrichter ineinander. Der Stator ist somit vollständig mit dem Umrichter montiert.

In einer weiteren vorteilhaften Ausführungsform der erfindungsgemäßen elektrischen Maschine ist der Kontaktierring auf dem Stator-Wickelkopf anschlussseitig aufgebracht. Diese Variante hat den Vorteil noch kompakter zu sein. Der Kontaktierring ist insbesondere über den Stator-Wickelkopf gestülpt.

Die Wicklungsleitung bezieht sich auf die Drähte oder Leiter, die in den Wicklungen der elektrischen Maschine verwendet werden. Diese Wicklungen sind entscheidend für die Funktion der Maschine, da sie das Magnetfeld erzeugen, das für den Betrieb notwendig ist. Hier wird vorwiegend von Statorwicklungen gesprochen. Die Wicklungsleitung ist zweckdienlicherweise gut isoliert, um Kurzschlüsse zu vermeiden und die Effizienz der Maschine zu maximieren. Die Art und Weise, wie die Wicklungen angeordnet und ausgeführt sind, beeinflusst die Leistung und die Eigenschaften der Maschine erheblich.

Bevorzugt ist der Stator in das Gehäuse eingefügt oder eingepresst. Dies hat den Vorteil, dass eine entsprechende Einpassung des Stators in das Gehäuse geschaffen ist, welche einen vergleichsweise guten Wärmeübergang vom Blechpaket des Stators auf das Gehäuse und optionale Gehäuserippen schafft.

In einer weiteren vorteilhaften Ausführungsform der erfindungsgemäßen elektrischen Maschine sind die zweiten Fixierungsgeometrien als Schnapp- oder Steckelemente ausgestaltet. Die Fixierung erfolgt bevorzugt über Schnapp- oder Steckelemente im Kontaktierring, welche in entsprechend vorgesehenen Geometrien oder Aussparungen im Statorblech einrasten.

Alternativ erfolgt die Fixierung über Schnapp- oder Steckelemente am Stator, welche zur Fixierung in entsprechend vorgesehenen Geometrien oder Aussparungen im Kontaktierring einrasten.

In einer weiteren vorteilhaften Ausführungsform der erfindungsgemäßen elektrischen Maschine ist der Kontaktierring anschlussseitig an der Wickelkopfbandage fixiert. Insbesondere ist hierzu der Ring noch zusätzlich radial durch eine Geometrie am Statorpaket ausgerichtet.

In einer weiteren vorteilhaften Ausführungsform der erfindungsgemäßen elektrischen Maschine weisen weitere Leitungsenden Steckkontaktiereinheiten auf, insbesondere Leitungsenden von Thermofühlern und/oder Anbauelementen, welche mittels weiterer erster Fixierungsgeometrien auf definierten Positionen auf dem Kontaktierring befestigt werden und für welche die gehäuseintegrierte Umrichtereinheit weitere elektrische Anschlüsse aufweist, welche als Steckkontaktiergegenstücke zu den Steckkontaktiereinheiten ausgestaltet sind.

Der Kontaktierring ist insbesondere entsprechend gestaltet, dass die Anschluss- und Signalleitungen, beispielsweise Thermofühler, oder die isolierten Drahtenden der Wicklungsenden durch den Ring geführt werden können, alternativ außen am Ring entlang und dort fixiert werden. Die Leitungsenden werden mit entsprechenden Anschlusselementen, hier Steckkontakteinheiten genannt, kontaktiert welche auf definierten Positionen auf dem Kontaktierring fest fixiert werden.

Beispielsweise weisen die Steckkontaktiereinheiten Buchsen, insbesondere Kunststoffbuchsen, auf, während die Steckkontaktiergegenstücke Pins, insbesondere Kupferpins, aufweisen. Alternativ können die Steckkontaktiereinheiten Pins, insbesondere Kupferpins, und die Steckkontaktiergegenstücke Buchsen, insbesondere Kunststoffbuchsen, aufweisen.

In einer weiteren vorteilhaften Ausführungsform der erfindungsgemäßen elektrischen Maschine sind die ersten Fixierungsgeometrien als Schnapp-, Press- oder Steckelemente ausgestaltet.

In einer weiteren vorteilhaften Ausführungsform der erfindungsgemäßen elektrischen Maschine ist der Kontaktierring aus einem elektrisch nicht-leitenden Material, insbesondere Kunststoff, gefertigt.

In einer weiteren vorteilhaften Ausführungsform der erfindungsgemäßen elektrischen Maschine sind die Kontaktflächen der Steckkontaktiergegenstücke zu den Steckkontaktiereinheiten so ausgestaltet, dass mögliche Relativbewegungen von Stator und Umrichtereinheit ausgeglichen werden können. Dies kann insbesondere mittels Federelementen gewährleistet werden, dass eine gute Möglichkeit geschaffen wird, die Relativbewegung auszugleichen. Alternativ hat auch ein einfacher Steckkontakt durch seine Kontaktfläche bzw. den Kontaktweg die Möglichkeit, Bewegungen von mehreren Millimetern in axialer Richtung auszugleichen. Der Pin bewegt sich hierbei an der Kontaktfläche der Buchse entlang. Auch ein Pins mit integrierten radialen Federn nach außen, um eine bessere Kontaktierung auch bei einer axialen Bewegung zu bekommen, können eingesetzt werden.

Buchsen und Stecker müssen entsprechend ausgelegt sein, dass mögliche Relativbewegungen von Stator und Umrichter ausgeglichen werden können, die Kontaktierung also nicht abbricht.

Das erfindungsgemäße Herstellungsverfahren umfasst die Montageschritte: Anbringen von Steckkontaktiereinheiten an den Leitungsenden der Wicklungsleitungen eines Stators, Anbringen der Steckkontaktiereinheiten an oder in ersten Fixierungsgeometrien eines Kontaktierrings, sowie Anbringen des Kontaktierrings mittels zweiter Fixierungsgeometrien am Stator, axiales Einfügen oder Einpressen des Stators in ein Gehäuse, Axiales Einschieben einer Umrichtereinheit mit Steckkontaktiergegenstücken in das Gehäuse bis zu einer Endposition der Umrichtereinheit, in welcher Endposition Steckkontaktiereinheiten und Steckkontaktiergegenstücken so zusammengefügt sind, dass Stator und Umrichtereinheit kontaktiert sind.

Ein besonderer Vorteil dieses Verfahrens ist, dass die axiale Montage des Umrichters in das Gehäuse zugleich zur Kontaktierung genutzt wird.

Ein weiterer Vorteil besteht darin, dass bewährte Montageverfahren wie das Einpressen oder Einfügen verwendet werden können. Damit bleiben etablierte Abläufe erhalten. Des Weiteren wird die Komponentenanzahl reduziert.

Das Einpressen hat noch den zusätzlichen Vorteil für eine sehr gute Wärmeanbindung ans Gehäuse zu sorgen. Darüber hinaus sind alle vorgeschlagenen Montage- beziehungsweise Fixierungsmechanismen mechanischer Art. Die Meisten davon stellen lösbare Verbindungen dar, die vorteilhaft für Reparatur und Rückbau sind.

In einer vorteilhaften Variante des erfindungsgemäßen Herstellungsverfahrens erfolgt das Anbringen von Steckkontaktiereinheiten an den Leitungsenden der Wicklungsleitungen eines Stators mittels Crimpen, Stecken oder CageClamp.

In einer weiteren vorteilhaften Variante des erfindungsgemäßen Herstellungsverfahrens erfolgt zusätzlich der Montageschritt des Anbringens von Steckkontaktiereinheiten an weiteren Leitungsenden des Stators, insbesondere an Leitungsenden von Thermofühlern und/oder Anbauelementen.

In einer weiteren vorteilhaften Variante des erfindungsgemäßen Herstellungsverfahrens werden die ersten und/oder zweiten Fixierungsgeometrien als Steck-, Press- und/oder Schnappelemente ausgeführt.

In einer weiteren vorteilhaften Variante des erfindungsgemäßen Herstellungsverfahrens werden die Fixierungsgeometrien für die Steckkontaktiereinheiten als Aufnahmen, insbesondere als Ausnehmungen oder Ausbuchtungen im Kontaktierring, ausgestaltet, in welche die Steckkontaktiereinheiten eingeschoben werden. Alternativ können die Fixierungsgeometrien auch als Auswölbungen, insbesondere Nasen, ausgestaltet sein, auf welche die Steckkontaktiereinheiten aufgeschoben oder aufgepresst werden.

In einer weiteren vorteilhaften Variante des erfindungsgemäßen Herstellungsverfahrens erfolgt wenigstens einer der Montageschritte halbautomatisiert oder automatisiert.

Ein wesentliches Merkmal der vorgeschlagenen Lösung ist die bauliche Verbindung des Stators mit einem Kontaktierring, wodurch eine kompakte Einheit entsteht. Der Kontaktierring bildet zusammen mit dem Stator eine Einheit, und die Anschlussenden werden in diesem Ring bereitgestellt. Diese Konstruktion bietet mehrere Vorteile: Die Kompaktheit ermöglicht eine leichtere und schnellere Montage, die zudem automatisiert erfolgen kann. Dies verbessert insbesondere die Austauschbarkeit der Antriebssysteme.

Ein weiterer wesentlicher Vorteil der vorgeschlagenen Lösung ist die Zusammenführung von Kontaktierung und Montage in einem Prozessschritt. Durch das Einfügen des Umrichters in das Gehäuse wird gleichzeitig die Kontaktierung hergestellt. Der Aufwand zur Vorbereitung der Leitungsenden des Stators bleibt nahezu identisch. Aufgrund der Fixierung auf dem Kontaktierring ist eine automatisierte Lösung denkbar.

Zusätzlich entfällt die Notwendigkeit einer separaten Kontaktierung der Statorleitungen und Umrichteranschlüsse im Klemmbrett. Auch die Durchführung der Statorleitungen durch die Gehäuseöffnung ist nicht mehr erforderlich. Dies führt zu einer erheblichen Reduzierung des Bauraums im Anschlussbereich, da das sehr große Klemmbrett mit einer Vielzahl an Anschlüssen auf die drei Anschlüsse der Energiezuleitung und eventuell Schnittstellenanschlüsse reduziert wird. Dadurch können Kosten für zusätzliche Bauteile wie einen Hilfsklemmkasten und dessen Montage eingespart werden.

Die Vorteile der vorgeschlagenen Lösung umfassen mehrere Aspekte. Erstens ermöglicht sie eine automatisierte Kontaktierung der Statoranschlüsse. Zweitens werden Kontaktierung und Montage in einem einzigen Prozessschritt zusammengeführt, was den gesamten Ablauf effizienter gestaltet. Drittens führt die Lösung zu einer Kostenreduktion, da weniger Prozessschritte erforderlich sind. Viertens können durch den Verzicht auf zusätzliche Anbauteile, wie beispielsweise ein Hilfsklemmbrett, weitere Kosten eingespart werden. Schließlich wird das manuelle Handling der Leitungen, wie etwa das Durchführen von Kabeln und die Anschlussarbeiten im Klemmkasten, erheblich reduziert.

Vorgeschlagen wird also eine elektrische Maschine, insbesondere eine Drehstromasynchron- oder Drehstromsynchronmaschine, in einem Gehäuse, umfassend eine gehäuseintegrierte Umrichtereinheit, die insbesondere in das Lagerschild integriert ist. Außerdem beinhaltet sie einen Stator mit einem Kontaktierring. Die Leitungsenden der Statorwicklung sind mit Steckkontaktiereinheiten versehen, die mithilfe erster Fixierungsgeometrien an definierten Positionen auf dem Kontaktierring befestigt sind. Sowohl Kontaktierring als auch der Stator weisen zweite Fixierungsgeometrien auf, durch die der Kontaktierring mit dem Stator verbunden ist. Das Herstellungsverfahren für eine solche elektrische Maschine umfasst mehrere Montageschritte. Zunächst werden Steckkontaktiereinheiten an den Leitungsenden der Wicklungsleitungen eines Stators angebracht. Anschließend die Steckkontaktiereinheiten in die ersten Fixierungsgeometrien eines Kontaktierrings eingesetzt und der Kontaktierring mittels der zweiten Fixierungsgeometrien am Stator befestigt. Danach wird die Statoreinheit axial in das Gehäuse eingefügt oder eingepresst. Schließlich wird eine Umrichtereinheit, die mit Steckkontaktiergegenstücken ausgestattet ist, axial in das Gehäuse eingeschoben, bis sie ihre Endposition erreicht, in der die Steckkontaktiereinheiten und die Steckkontaktiergegenstücke so zusammengefügt sind, dass der Stator und die Umrichtereinheit kontaktiert sind.

### Figurenbeschreibung

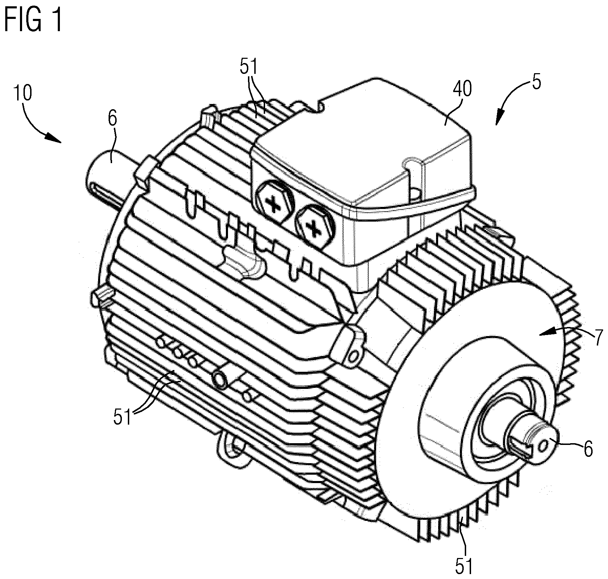

Beispiele und Ausführungsformen der vorliegenden Erfindung werden noch in exemplarischer Weise mit Bezug auf die Figuren 1 bis 6 der angehängten Zeichnung beschrieben. In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

Obwohl die Erfindung im Detail durch das bevorzugte Ausführungsbeispiel näher illustriert und beschrieben wird, ist sie nicht durch die offenbarten Beispiele eingeschränkt. Variationen hiervon können vom Fachmann abgeleitet werden, ohne den Schutzumfang der Erfindung, wie er durch die Patentansprüche definiert wird, zu verlassen.

Die Zeichnung zeigt schematisch:
- Figur 1: eine elektrische Maschine 10,
- Figur 2: eine Kontaktierung, gemäß Stand der Technik, einer Energieleitung, von Signal- und Umrichteranschlüssen auf einem Klemmbrett auf einem Gehäuse 5,
- Figur 3: einen Schnitt durch eine erfindungsgemäße elektrische Maschine 10, in der eine gehäuseintegrierte Umrichtereinheit 3 mittels eines Kontaktierrings 1 die Statorleitungen 22 kontaktiert und
- Figur 4: eine teilperspektivische Darstellung der Komponenten Stator 2, Umrichtereinheit 3 und Kontaktierring 1 entlang ihrer Montageachse
- Figur 5: ein erstes Beispiel eines Kontaktierringdesigns und
- Figur 6: ein zweites Beispiel eines Kontakierringdesigns.

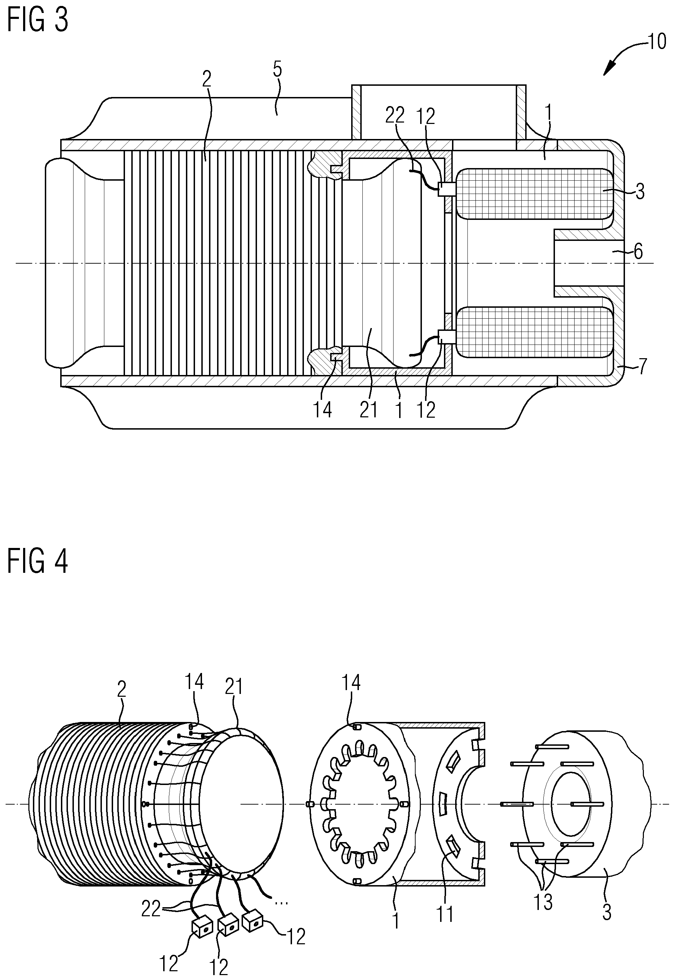

In der Figur 1 ist zunächst eine perspektivische Darstellung der Aussenansicht einer elektrischen Maschine 10 in einem Gehäuse 5 gezeigt, mit einer Lageraufnahme am Boden des Lagerschildes 7. Die Welle 6 ragt aus dem Gehäuse 5. Auf der Stator-Seite, vergleiche Figur 3, wird die Arbeitsmaschine, wie z.B. ein Kompressor oder eine Pumpe an die Welle 6 angeschlossen. Auf der Seite des Lagerschildes 7 sind modulartige Anbauten wie eine Bremseinheit, Fremdlüftermodul, oder ein Geber bzw. Drehimpulsgeber anbringbar. Es sind Kühlrippen 51 an der Gehäuseaußenwand gezeigt. Der Klemmenkasten 40 ist kleiner dimensioniert dargestellt, als für bisher übliche Klemmbretter notwendig, vergleiche Figur 2. Der Klemmenkasten 40 ist durch Einsatz der erfindungsgemäß vorgeschlagenen Lösung noch weiter verkleinerbar bis hin zu gar nicht mehr von Bedarf.

Für den elektrischen Anschluss von elektrischen Maschinen 10, beispielsweise Elektromotoren werden an die Enden der Wicklungsphasen Anschlussleitungen 22 elektrisch kontaktiert. Besonders interessant ist die vorgeschlagene Lösung für Drehstromasynchron -bzw. Drehstromsynchronmotoren. Die Kontaktierung erfolgt über Verfahren wie z.B. crimpen, löten oder schweißen. An den Enden der Anschlussleitungen 22 befinden sich üblicherweise Kabelschuhe. Diese Leitungen werden bisher händisch durch eine Gehäuseöffnung üblicherweise auf das Klemmenbrett im Anschlusskasten 40 geführt, um die Anschlüsse dem Kunden benutzerfreundlich bereit zu stellen. Bei dezentralen, sogenannten wandmontierten Umrichter-Ausführungen erfolgt der Anschluss zwischen Umrichter 3 und Stator 2 über eine Zuleitung zum Klemmenbrett. Bei integrierten, sogenannten aufgesetzten bzw. motormontierten Umrichter-Ausführungen, wie beispielsweise in Figur 2 gezeigt, werden bisher die Anschlussleitungen 41 durch die Gehäuseöffnung direkt zum Umrichter 3geführt. Die Anschlussleitungen für die Netzspannung 41 sind dabei üblicherweise mit Aderendhülsen ausgeführt, die Kontaktierung erfolgt mittels Lüsterklemmen oder Cage-Clamp-Kontakten.

Zusätzlich zu den Spannungsanschlussleitungen 41 gibt es optional die Möglichkeit weiterer Leitungen 46, 47, zum Beispiel für die thermische Motorüberwachung 46 oder andere Einbauteile, wie z.B. eine Stillstandsheizung, welche ebenfalls händisch durch die Gehäuseöffnung in den Anschlusskasten 40 bzw. direkt in den motormontierten Umrichter 3 geführt werden können. Im Anschlusskasten 40 erfolgen Anschlüsse üblicherweise auf Lüsterklemme. Des Weiteren sind in Figur 2 Anschlüsse für den Motor 42, Anschlüsse für Digitaleingänge und -ausgänge 43, Anschlüsse für eine 24Volt-Netzteil 44, geschaltet/ungeschaltet, Anschlüsse für DIP-Schalter 45 (Dual In-line Package Schalter), Anschlüsse für Motortemperatursensor 46, Anschlüsse für eine Bremswiderstandsmessung 47 sowie Anschlüsse für eine EM-Bremse, zum Beispiel 180 V, gezeigt. Die vorgeschlagene Lösung vermeidet vorteilhaft den bisher großen manuellen Aufwand, die Ständerleitungen 21 und zusätzliche Leitungen von der Wicklung durch die Gehäuseöffnung zu führen, und reduziert demnach, besonders bei kleineren Baugrößen, die bislang unverhältnismäßig hohen Montagekosten.

Anders als bei bisherigen sogenannten integrierten Umrichterausführungen, welche tatsächlich aber montierte oder aufgesetzte Umrichterlösung sind, vergleiche Figur 2, ist die hier vorgeschlagene gehäuseintegrierte Umrichtereinheit 3 auch tatsächlich im Gehäuse 5 integriert, siehe Figuren 3 und 4. Insbesondere ist die gehäuseintegrierte Umrichtereinheit 3 radial um die Welle 6 herum angeordnet und direkt an die Statorleitungen 22 anschließbar.

Es ist gezeigt, dass Stator 2, Wickelkopf 21 und Umrichter 3 axial hintereinander angeordnet sind. In der in Figur 3 gezeigten Ausführung ist eine Verschaltung beziehungsweise Kontaktierung der Statorleitungen 22 an ein Klemmbrett nicht notwendig.

Die Figur 3 zeigt schematisch im Querschnitt einen Stator 2 mit montierten Steckkontaktiereinheiten 12 im Gehäuse 5, den Kontaktierring 1 und den damit justierten und kontaktierten Umrichter 3. Die Steckkontaktiergegenstücke 13 sind mit den Steckkontaktiereinheiten 12 zusammengefügt. Dabei bildet der Kontaktierring 1 zusammen mit dem Stator 2 eine bauliche Einheit.

Figur 4 zeigt eine Skizze des Stators 2 mit montierten Steckkontakteinheiten 12, hier Buchsen 12, sowie den Kontaktierring 1 und die Umrichtereinheit 3 mit Steckkontaktgegenstücken 13, hier Pins 13, entlang ihrer Montageachse. Die axiale Montage des Umrichters 13 in das Gehäuse 5 wird so zur Kontaktierung genutzt. Zunächst wird der Kontaktierring 1 auf dem Stator 2 befestigt. Er bildet eine bauliche Einheit mit dem Stator 2. Dadurch kann die Statoreinheit 2+1 bevorzugt konventionell in das Gehäuse 5 eingefügt oder eingepresst. In einem davor liegenden Montageschritt werden die Enden der Statorleitungen 22 dafür nicht mit den üblichen Kontaktmaterialien wie Kabelschuhen oder Aderendhülsen ausgestattet, sondern werden an Steckkonktiereinheiten 12, insbesondere Kunststoffbuchsen 12 angeschlossen. Ebenso sind weitere Kabelenden, beispielsweise von Thermofühlern oder Anbauelementen, mit diesen Kunststoffbuchsen 12 versehen. Die Kontaktierung in der Buchse 12 selbst kann über übliche Technologien wie Crimpen, Stecken oder CageClamp erfolgen. Anschließend werden die Steckkontakiereinheiten 12 fest am Kontaktierring 1 befestigt und dieser wiederum am Stator 2. Je nach Befestigungsart wird zunächst der Kontaktierring 1 am Stator 2 fixiert und dann die Steckkontaktiereinheiten 12 am Kontaktierring 1 oder andersherum. Um die Kunststoffbuchsen 12 oder Stecker der Statoranschlüsse am Kontaktierring 1 zu befestigen, ist dieser mit Fixierungsgeometrien 11 wie Nasen zum Aufschieben oder Einpressen oder Ausbuchtungen zum Einstecken der Steckkontakiereinheiten 12 ausgestattet. Die Montage der Steckkontakiereinheiten 12 auf die Fixiergeometrien 11 des Kontaktierrings 1 erfolgt in der Regel manuell, ist aber auch automatisiert realisierbar. Der Kontaktierring 1 ist bevorzugt aus Kunststoff gefertigt, insbesondere aus einem nicht elektrische leitfähigen Material.

Die vorgeschlagene Lösung basiert also auf einem im Motorinnenraum integrierten Umrichter 3. Dabei wird der Umrichter 3 axial hinter dem Stator 2 mit Wicklung 21 im Gehäuse 5 und/oder im Lagerschild 7 montiert.

Im Kern der vorgeschlagenen Lösung steht die direkte Kontaktierung von Stator 2 und gehäuseintegriertem Umrichter 3 innerhalb des Motorinnenraums. Hierfür ist ein spezieller Kontaktierring 1 vorgesehen, der auf dem Wickelkopf 21 des Stators 2 angebracht ist, vergleiche Figuren 3 bis 6. Der Ring 1 wird mithilfe von Schnapp- oder Steckelementen 14 fixiert, die in entsprechend vorgesehenen Geometrien 14 oder Aussparungen im Statorblech einrasten. Alternativ kann der Ring 1 stirnseitig auf den Wickelkopf 21 fixiert werden, was mit einer zusätzlichen radialen Ausrichtung durch eine Geometrie am Statorpaket realisiert werden kann.

Der Kontaktierring 1 ist so gestaltet, dass Anschluss- und Signalleitungen 22, wie etwa Thermofühler oder isolierte Drahtenden der Wicklungsenden, durch ihn hindurchgeführt werden können. Alternativ können diese Leitungen 22 auch außen am Ring 1 entlanggeführt und dort fixiert werden. Die Leitungsenden werden dann mit entsprechenden Anschlusselementen 12 wie Buchsen oder Steckern kontaktiert, die an definierten Positionen auf dem Kontakierring 1 fest fixiert sind. Diese Fixierung kann durch Steck-, Press- oder Schnappfunktionen 11 zwischen Anschlusselement 12 und Ring 1 erfolgen. Alle diese Fertigungsschritte können sowohl manuell als auch automatisiert durchgeführt werden, noch bevor der Stator 2 in das Gehäuse 5 eingebracht wird.

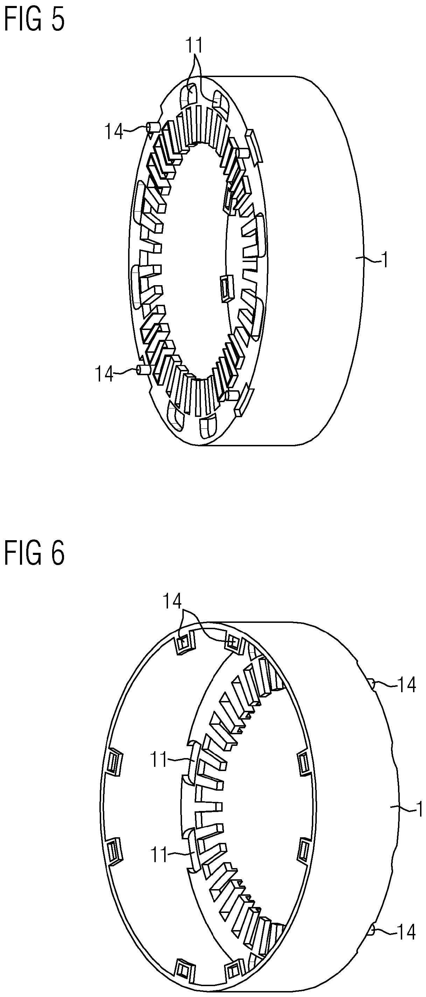

Der Kontaktierring 1 sollte aus einem elektrisch nichtleitenden Material, vorzugsweise Kunststoff, bestehen. Mögliche Design-Ausführungen sind in den Figuren 5 und 6 dargestellt. Nachdem der mit dem Kontaktierring 1 ausgestattete und kontaktierte Stator 2 in das Gehäuse 5 eingesetzt wurde, kann das Umrichterelement 3 in das Motorgehäuse 5 geführt werden. Am Umrichterelement 3 befinden sich die Gegenkontakte 13 zu den Anschlüssen 12 auf dem Stator-Kontaktierring 1, die in identischen gegenüberliegenden Positionen angebracht sind. Sobald das Umrichterelement 3 seine Endposition erreicht hat, ist auch der Umrichter 3 vollständig mit dem Stator 2 kontaktiert. Die Kontaktfläche zwischen Buchse 12 und Stecker 13 ist so ausgelegt, dass mögliche Relativbewegungen von Stator 2 und Umrichter 3 ausgeglichen werden können, ohne dass die Kontaktierung abbricht.

In einem weiteren Schritt wird der Umrichter 3 in das Gehäuse 5 montiert, indem er axial eingeschoben wird. Im Design des Umrichters 3 befinden sich entsprechende Steckereinheiten 13, wie in Figur 4 gezeigt. Diese Stecker 13 sind in Position und Anzahl identisch zu den montierten Buchsen 12 des Stators 2. Wenn der Umrichter 3 seine Endposition erreicht hat, stecken alle Buchsen 12 und Stecker 13 von Stator 2 und Umrichter 3 ineinander, wodurch der Stator 2 vollständig mit dem Umrichter 3 montiert ist. Die Kontaktfläche der Buchse 12 mit dem Stecker 13 ist entsprechend ausgelegt, Relativbewegungen von Stator 2 und Umrichter 3 auszugleichen, zum Beispiel bei Vibrationen. Dies hat den Vorteil, dass die Kontaktierung nicht unterbrochen wird. Die Stecker 13 auf dem Umrichter 3 können sowohl auf der Stirnseite des Umrichters 3 angebracht als auch im Design integriert sein. Es ist auch möglich, dass Stecker 12 und Buchse 13 vertauscht sind, sodass die Steckkontakiereinheiten 12 als Stecker ausgestaltet sind und die Steckkontaktiergegenstücke 13 als Buchsen im Umrichter 3 integriert sind.

Der wesentliche Vorteil der vorgeschlagenen Lösung liegt in der Zusammenführung von Kontaktierung und Montage in einem einzigen Prozessschritt. Durch das Einsetzen des Umrichters 3 in das Gehäuse 5 wird die Kontaktierung automatisch hergestellt. Der Aufwand zur Vorbereitung der Leitungsenden des Stators 2 bleibt dabei nahezu unverändert. Dank der Fixierung auf dem Kontaktierring 1 ist zudem eine automatisierte Umsetzung realisierbar.

Ein weiterer Vorteil besteht darin, dass eine separate Kontaktierung der Statorleitungen 22 und Umrichteranschlüsse 13 im Klemmenkasten 40 nicht mehr erforderlich ist. Auch die Durchführung der Statorleitungen 22 durch die Gehäuseöffnung entfällt, was zu einer erheblichen Reduzierung des Bauraums im Anschlussbereich führt. Das bisher notwendige, sehr große Klemmbrett mit einer Vielzahl von Anschlüssen wird auf die drei Anschlüsse der Energiezuleitung 41 und gegebenenfalls Schnittstellenanschlüsse reduziert. Dadurch können Kosten für zusätzliche Bauteile wie einen Hilfsklemmkasten 40 und ein weiteres Klemmbrett sowie deren Montage eingespart werden.

Zusammengefasst ergeben sich folgende Vorteile: Die Kontaktierung der Statoranschlüsse 12 kann automatisiert erfolgen, Kontaktierung und Montage werden in einem einzigen Prozessschritt vereint, und es kommt zu einer Kostenreduktion durch weniger Prozessschritte und den Wegfall zusätzlicher Anbauteile wie etwa eines Hilfsklemmbretts. Darüber hinaus wird das manuelle Handling der Leitungen 22, wie beispielsweise die Kabeldurchführung und die Anschlussarbeiten im Klemmkasten 40, deutlich reduziert.

### Bezugszeichenliste

- 1: Kontaktierring
- 2: Stator
- 3: Umrichtereinheit
- 5: (Motor)gehäuse
- 6: Welle
- 7: Lagerschild
- 10: elektrische Maschine
- 11: Aufnahme für Steckkontaktiereinheit
- 12: Steckkontaktiereinheit
- 13: Steckkontakte (Pins)
- 14: Fixiergeometrien
- 21: Wicklungssystem, beziehungsweise Statorwickelkopf des Wicklungssystems
- 22: Statorleitungen
- 40: Klemmenkasten
- 41: Anschlüsse Netzspannung
- 42: Anschlüsse Motor
- 43: Anschlüsse Digitaleingänge/-ausgänge
- 44: Anschlüsse Netzteil
- 45: DIP-Schalter
- 46: Anschlüsse Temperatursensor
- 47: Anschlüsse Bremswiderstand
- 48: Anschlüsse EM-Bremse
- 51: Kühlrippen

## Patentansprüche

1. Elektrische Maschine (10), insbesondere Drehstromasynchron- oder Drehstromsynchronmaschine, in einem Gehäuse (5) umfassend
eine gehäuseintegrierte Umrichtereinheit (3), insbesondere eine lagerschildintegrierte Umrichtereinheit (3) und
einen Stator (2) mit einem Kontaktierring (1), umfassend Wicklungsleitungen (22), deren Leitungsenden Steckkontaktiereinheiten (12) aufweisen, welche mittels erster Fixierungsgeometrien (11) auf definierten Positionen auf dem Kontaktierring (1) befestigt sind und wobei
der Kontaktierring (1) als auch der Stator (2) zweite Fixierungsgeometrien (14) aufweisen, mittels welcher der Kontaktierring (1) mit dem Stator (2) verbunden ist.

2. Elektrische Maschine (10) nach Anspruch 1, wobei die gehäuseintegrierte Umrichtereinheit (3) elektrische Anschlüsse aufweist, welche als Steckkontaktiergegenstücke (13) zu den Steckkontaktiereinheiten (12) ausgestaltet sind.

3. Elektrische Maschine (10) nach Anspruch 1 oder 2, wobei der Kontaktierring (1) auf dem Stator-Wickelkopf (21) anschlussseitig aufgebracht ist.

4. Elektrische Maschine (10) nach einem der vorstehenden Ansprüche, wobei die zweiten Fixierungsgeometrien (14) als Schnapp- oder Steckelemente ausgestaltet sind.

5. Elektrische Maschine (10) nach einem der vorstehenden Ansprüche, wobei der Kontaktierring (1) anschlussseitig an der Wickelkopfbandage fixiert ist.

6. Elektrische Maschine (10) nach einem der vorstehenden Ansprüche, wobei weitere Leitungsenden Steckkontaktiereinheiten (12) aufweisen, insbesondere Leitungsenden von Thermofühlern und/oder Anbauelementen, welche mittels weiterer erster Fixierungsgeometrien (11) auf definierten Positionen auf dem Kontaktierring (1) befestigt werden und für welche die gehäuseintegrierte Umrichtereinheit (3) weitere elektrische Anschlüsse aufweist, welche als Steckkontaktiergegenstücke (13) zu den Steckkontaktiereinheiten (12) ausgestaltet sind.

7. Elektrische Maschine (10) nach einem der vorstehenden Ansprüche, wobei die ersten Fixierungsgeometrien (11) als Schnapp-, Press- oder Steckelemente ausgestaltet sind.

8. Elektrische Maschine (10) nach einem der vorstehenden Ansprüche, wobei der Kontaktierring (1) aus einem elektrisch nicht-leitenden Material, insbesondere Kunststoff gefertigt ist.

9. Elektrische Maschine (10) nach einem der vorstehenden Ansprüche, wobei die Kontaktflächen der Steckkontaktiergegenstücke (13) zu den Steckkontaktiereinheiten (12) so ausgestaltet sind, dass mögliche Relativbewegungen von Stator (2) und Umrichtereinheit (3) ausgeglichen werden können.

10. Herstellungsverfahren für eine elektrische Maschine (10) nach einem der vorstehenden Ansprüche, umfassend die Montageschritte:
- Anbringen von Steckkontaktiereinheiten (12) an den Leitungsenden der Wicklungsleitungen (22) eines Stators (2),
- Anbringen der Steckkontaktiereinheiten (12) an oder in ersten Fixierungsgeometrien (11) eines Kontaktierrings (1), sowie Anbringen des Kontaktierrings (1) mittels zweiter Fixierungsgeometrien (14) am Stator (2),
- Axiales Einfügen oder Einpressen des Stators (2) in ein Gehäuse (5),
- Axiales Einschieben einer Umrichtereinheit (3) mit Steckkontaktiergegenstücken (13) in das Gehäuse (5) bis zu einer Endposition der Umrichtereinheit (3), in welcher Endposition Steckkontaktiereinheiten (12) und Steckkontaktiergegenstücken (13) so zusammengefügt sind, dass Stator (2) und Umrichtereinheit (3) kontaktiert sind.

11. Herstellungsverfahren nach Anspruch 10, wobei das Anbringen von Steckkontaktiereinheiten (12) an den Leitungsenden der Wicklungsleitungen (22) eines Stators (2) mittels Crimpen, Stecken oder CageClamp erfolgt.

12. Herstellungsverfahren nach Anspruch 10 oder 11, wobei zusätzlich der Montageschritt des Anbringens von Steckkontaktiereinheiten (12) an weiteren Leitungsenden des Stators (2) erfolgt, insbesondere an Leitungsenden von Thermofühlern und/oder Anbauelementen.

13. Herstellungsverfahren nach einem der Ansprüche 10 bis 12, wobei die ersten und/oder zweiten Fixierungsgeometrien (11, 14) als Steck, Press- und/oder Schnappelemente ausgefort werden.

14. Herstellungsverfahren nach einem der Ansprüche 10 bis 13, wobei die Fixierungsgeometrien (11) für die Steckkontaktiereinheiten (12) als Aufnahmen, insbesondere Ausnehmungen oder Ausbuchtungen im Kontaktierring (1) ausgestaltet werden, und in welche Fixierungsgeometrien (11) die Steckkontaktiereinheiten (12) eingeschoben werden oder wobei die Fixierungsgeometrien (11) für die Steckkontaktiereinheiten (12) als Auswölbungen, insbesondere Nasen, ausgestaltet sind, auf welche die Steckkontaktiereinheiten (12) aufgeschoben oder aufgepresst werden.

15. Herstellungsverfahren nach einem der Ansprüche 10 bis 14, wobei wenigstens einer der Montageschritte halbautomatisiert oder automatisiert erfolgt.
